# NEUE EUROPÄISCHE PATENTSCHRIFT

(11) **EP 2 155 963 B2**
(45) Veröffentlichungstag und Bekanntmachung des Hinweises auf die Entscheidung über den Einspruch: **03.12.2014**
(45) Hinweis auf die Patenterteilung: 01.09.2010
(21) Anmeldenummer: 08735150.8
(22) Anmeldetag: 10.04.2008
(51) Int. Cl.: D21H 21/40, D21H 21/48, G07D 7/00

(54) **DURCHSICHTSSICHERHEITSELEMENT**
INSPECTION SECURITY ELEMENT
ÉLÉMENT DE SÉCURITÉ TRANSPARENT

(30) Priorität: 25.04.2007 DE 102007019522
(43) Veröffentlichungstag der Anmeldung: 24.02.2010
(73) Patentinhaber: Giesecke & Devrient GmbH, 81677 München (DE)
(72) Erfinder: DICHTL, Marius, 81371 München (DE); HEIM, Manfred, 83646 Bad Tölz (DE); RAHM, Michael, 83703 Dürnbach (DE); KLEY, Ernst-Bernhard, 07743 Jena (DE); KÄMPE, Thomas, 42000 Saint Etienne (FR)
(74) Vertreter: Zeuner Summerer Stütz
(86) Internationale Anmeldenummer: PCT/EP2008/002841
(87) Internationale Veröffentlichungsnummer: WO 2008/131852

(56) Entgegenhaltungen:
- EP-A1- 0 559 069
- EP-A2- 0 012 375
- WO-A-03/059643
- WO-A-2006/002756
- WO-A-2006/087138
- WO-A-2006/133863
- WO-A-2007/137744
- WO-A1-95/35553
- WO-A1-03/055691
- WO-A1-03/068525
- WO-A1-2006/016265
- WO-A1-2006/087138
- WO-A2-2005/095118
- WO-A2-2006/002756
- WO-A2-2006/095161
- WO-A2-2007/137744
- DE-A1- 10 100 836
- DE-A1- 10 100 836
- DE-A1- 10 308 305
- DE-A1- 10 348 619
- DE-A1- 10 348 619
- DE-A1-102004 031 879
- JP-A- 2001 315 472
- US-A- 3 882 207
- US-A- 5 130 857
- US-A- 5 585 144
- ARTECH HOUSE: 'Opticaly Document Security', Bd. 2ND ED., 1998 vol. RUDOLF L., VAN RENESSE: 'Iridescent Optically Variable Devices: A Survey', Seiten 349 - 368

## Beschreibung

Die Erfindung betrifft ein Durchsichtssicherheitselement für Sicherheitspapiere, Wertdokumente und dergleichen, das zumindest ein erstes und ein zweites Sicherheitsmerkmal aufweist, die auf gegenüberliegenden Seiten des Sicherheitselements angeordnet sind.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, eines Aufreißfadens für Produktverpackungen, eines aufgebrachten Sicherheitsstreifens, einer Abdeckfolie für eine Banknote mit einer durchgehenden Öffnung oder eines selbsttragenden Transferelements ausgebildet sein, wie etwa einem Patch oder einem Etikett, das nach seiner Herstellung auf ein Wertdokument aufgebracht wird.

Seit einigen Jahren haben sich auch Durchsichtsfenster als attraktive Sicherheitselemente in Polymer- und neuerdings auch in Papier-Banknoten erwiesen, da sie den Einsatz einer Vielzahl von Sicherheitsmerkmalen gestatten.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen. Beilspielsweise beschreibt die Druckschrift EP 1468141 A2 ein Durchsichtsfenster, das ein Sicherheitselement enthalten kann, das aus einer Beugungsstruktur, einem Dünnschichtelement, einem Polarisationsfilter oder einem Aufdruck besteht, der wenigstens einen Stoff mit optisch variablen, lumineszierenden, elektrisch leitfähigen oder magnetischen Eigenschaften aufweist.

Ausgehend davon liegt der Erfindung die Aufgabe zugrunde, ein Durchsichtssicherheitselement der eingangs genannten Art anzugeben, das die Nachteile des Standes der Technik vermeidet. Insbesondere soll das Durchsichtssicherheitselement ein ansprechendes visuelles Erscheinungsbild mit hoher Fälschungssicherheit verbinden.

Diese Aufgabe wird durch das Durchsichtssicherheitselement mit den Merkmalen des Hauptanspruchs gelöst. Ein Sicherheitspapier, ein Wertdokument sowie ein entsprechendes Herstellungsverfahren sind in den nebengeordneten Ansprüchen angegeben. Weiterbildungen der Erfindung sind Gegenstand der Unteransprüche.

Gemäß einem ersten Aspekt der Erfindung ist bei einem gattungsgemäßen Durchsichtssicherheitselement das erste Sicherheitsmerkmal ein in Reflexion erkennbares Sicherheitsmerkmal mit einem elektromagnetische Strahlung beeinflussenden Gittermuster aus einer Vielzahl von Strichgitterlinien. Das zweite Sicherheitsmerkmal ist erfindungsgemäß ein in Transmission strahlformendes optisches Element. Das zweite Sicherheitsmerkmal ist als Sicherheitsmerkmal zweiter Stufe ausgebildet, kann also nur mit

Hilfsmitteln, insbesondere einer Laserquelle, wie etwa einem Laserpointer verifiziert werden. Bei dem ersten Sicherheitsmerkmal handelt es sich dagegen stets um ein mit bloßem Auge erkennbares Sicherheitsmerkmal erster Stufe, das dem Betrachter insbesondere einen farbigen, bewegten oder räumlichen Bildeindruck vermittelt. Auf diese Weise verbindet das erfindungsgemäße Durchsichtssicherheitselement hohe Fälschungssicherheit mit einer visuell ansprechenden Erscheinung für den Betrachter.

In einer bevorzugten Ausgestaltung stellt das erste Sicherheitsmerkmal eine diffraktive Beugungsstruktur, insbesondere ein Hologramm, ein holographisches Gitterbild, eine geblazede Beugungsstruktur, ein computergeneriertes Hologramm (CGH) oder eine andere hologrammähnliche Beugungsstruktur dar. Das Gittermuster des ersten Sicherheitsmerkmals kann insbesondere durch holographische Direktbelichtung, durch ein Dot-Matrix-Verfahren oder mit Elektronenstrahllithographie hergestellt sein.

In einer alternativen, ebenfalls vorteilhaften Gestaltung stellt das erste Sicherheitsmerkmal eine achromatische Mattstruktur dar, die bei der Betrachtung keine diffraktiven Effekte zeigt, sondern lediglich streuende Wirkung hat.

In beiden Fällen besteht das Gittermuster des ersten Sicherheitsmerkmals mit Vorteil aus einer Vielzahl von Gitterlinien mit vorzugsweise sinusförmigem Profil, wobei der Abstand und die Orientierung der Gitterlinien über der Fläche des Sicherheitsmerkmals variieren können, um einen gewünschten optischen Effekt zu erzeugen. Um einen ansprechenden visuellen Eindruck zu erzeugen, stellt das Gittermuster insbesondere ein Wechselbild, ein Pumpbild, ein Bewegungsbild, ein Morphbild oder ein Stereobild dar. Nähere Einzelheiten zur Gestaltung und den Eigenschaften derartiger Gitterbilder können der Druckschrift DE 103 48 619 A1 entnommen werden, deren Offenbarung insoweit in die vorliegende Beschreibung aufgenommen wird.

Das erste Sicherheitsmerkmal enthält eine in einem strahlungshärtenden oder thermoplastischen Lack ausgebildete Prägestruktur. Die Prägestruktur kann dabei als kontinuierliche Prägestruktur ausgebildet sein, oder auch als Binärstruktur, die ausschließlich ebene Flächenabschnitte enthält, die auf nur zwei verschiedenen Höhenstufen angeordnet sind. Allgemeiner kann die Prägestruktur als sogenannte Multilevelstruktur ausgebildet sein, die ausschließlich ebene Flächenabschnitte enthält, die auf n verschiedenen Höhenstufen angeordnet sind, wobei n vorzugsweise zwischen 4 und 16 liegt.

Mit Vorteil ist die Prägestruktur mit einer semitransparenten Metallschicht, vorzugsweise einer dünnen Aluminium-, Chrom-, Silber- oder Kupferschicht beschichtet.

In manchen Ausgestaltungen ist eine besonders hohe Lichtdurchlässigkeit des Durchsichtssicherheitselements wünschenswert. Diese kann beispielsweise dadurch erreicht werden, dass die Prägestruktur statt mit einer semitransparenten Metallschicht mit einer hochbrechenden Schicht, vorzugsweise einer dünnen ZnS-Schicht beschichtet wird. In einer weiteren Ausgestaltung kann die Prägestruktur auch mit einem Dünnschichtelement mit Farbkippeffekt oder flüssigkristallinem Material mit Farbkippeffekt beschichtet sein.

Zur weiteren Erhöhung der Fälschungssicherheit sind die Prägestruktur und die Beschichtung durch eine lichtdurchlässige Schutzlackschicht eingeebnet. Um eine Beeinflussung der Phasen der durch das Sicherheitselement laufenden Wellenfronten zu vermeiden bzw. möglichst gering zu halten, entspricht der Brechungsindex der Schutzlackschicht im Wesentlichen dem Brechungsindex der Lackschicht, in die die Prägestruktur eingebracht ist.

In allen Varianten enthält das erste Sicherheitsmerkmal mit Vorteil eine mit bloßem Auge und ohne Hilfsmittel erkennbare Information, insbesondere Muster, Zeichen oder eine Codierung. Wie oben bereits erwähnt, kann sich die dargestellte Information beim Bewegen, insbesondere beim Kippen oder Drehen des Sicherheitselements verändern und so beispielsweise ein Wechsel-, Morph-, Pump- oder Lauf-Bild darstellen.

Bei dem zweiten Sicherheitsmerkmal handelt es sich um ein diffraktives optisches Element, das aus einem durchtretenden Strahl im Wesentlichen parallelen Lichts in Transmission ein mit einem Schirm auffangbares Projektionsbild erzeugt. Das diffraktive optische Element ist dabei in der Regel auf Licht einer vorbestimmten Wellenlänge ausgelegt. Ebenso wie das oben beschriebene Prägehologramm kann auch das diffraktive optische Element eine in einem strahlungshärtenden oder thermoplastischen Lack ausgebildete Prägestruktur enthalten, die zur Erhöhung der Fälschungssicherheit zweckmäßig durch eine hochbrechende Schutzschicht eingeebnet ist.

Das diffraktive optische Element ist vorzugsweise aus einer Mehrzahl diffraktiver Elementarzellen gebildet, die eine laterale Abmessung unterhalb von 1 mm, vorzugsweise zwischen 3 µm und 100 µm aufweisen.

Das Projektionsbild des zweiten Sicherheitsmerkmals stellt vorzugsweise eine mit bloßem Auge und ohne Hilfsmittel nicht erkennbare Information, insbesondere Muster, Zeichen oder eine Codierung dar, beispielsweise ein Bildmotiv, ein Symbol oder einen ein- oder zweidimensionalen Barcode. Die Information des zweiten Sicherheitsmerkmals kann in einem speziellen Ausführungsbeispiel statisch sein, sich also beim Überstreichen des Sicherheitsmerkmals mit einem Laserstrahl nicht verändern. Es sind jedoch auch Bewegungseffekte möglich, bei denen sich das Projektionsbild über die Fläche des Sicherheitsmerkmals verändert, so dass beim Überstreichen des Sicherheitsmerkmals mit einem Laserstrahl ein bewegtes oder sich veränderndes Bild auf den Schirm projiziert wird.

Das erste und zweite Sicherheitsmerkmal des Durchsichtssicherheitselements sind mit Vorteil auf gegenüberliegenden Seiten einer Kunststofffolie, insbesondere einer PET-Folie angeordnet. Die Informationen der beiden Sicherheitsmerkmale können voneinander unabhängig sein oder auch aufeinander bezogene oder einander ergänzende Informationen darstellen.

Das Sicherheitselement kann auf der Seite des zweiten Sicherheitsmerkmals mit einer weiteren semitransparenten Metallschicht versehen sein, so dass das erste Sicherheitselements bei Betrachtung von der Seite des zweiten Sicherheitsmerkmals kaum oder nicht erkennbar ist. Alternativ kann auf der Seite des zweiten Sicherheitsmerkmals ein weiteres in Reflexion erkennbares Sicherheitsmerkmal mit einem elektromagnetische Strahlung beeinflussenden Gittermuster aus einer Vielzahl von Strichgitterlinien vorgesehen sein, wie etwa ein zweites semitransparentes Prägehologramm.

In einer Weiterbildung der Erfindung enthält das Sicherheitselement in zumindest einem Teilbereich einen Gitterpolarisator, der ein Substrat mit einer ersten Oberfläche aufweist, in die eine Reliefstruktur eingebracht ist, und wobei
- die Reliefstruktur eine Anordnung von elektrisch leitfähigen, parallelen Gitterlinien mit einer vorbestimmten Gitterkonstante und Gitterorientierung aufweist, die durch im Wesentlichen nichtleitende Zwischenräume voneinander getrennt sind, und
- die Gitterkonstante der Gitterlinien so gewählt ist, dass der Gitterpolarisator die Polarisation des auf die Gitterlinien auftreffenden Lichts verändert, so dass das reflektierte und/ oder das transmittierte Licht in einer vorbestimmten Ebene linear polarisiert ist.

In einer weiteren Ausführungsform wird das Durchsichtssicherheitselement mit lichtpolarisierenden Flüssigkristallschichten kombiniert. Die Polarisation des auf diese Schicht auftreffenden Lichts wird dabei verändert, so dass das reflektierte und/ oder transmittierte Licht in einer bestimmten Ebene linear polarisiert ist.

Nach einem zweiten Erfindungsaspekt ist bei einem gattungsgemäßen Durchsichtssicherheitselement vorgesehen, dass das erste Sicherheitsmerkmal ein semitransparentes, in Reflexion strahlformendes optisches Element ist und dass das zweite Sicherheitsmerkmal ein in Transmission strahlformendes optisches Element ist. Bei einem Durchsichtssicherheitselement nach diesem Erfindungsaspekt stellen die beiden Sicherheitsmerkmale jeweils Sicherheitsmerkmale zweiter Stufe dar, da sie beide Hilfsmittel zur ihrer Verifizierung benötigen.

Dabei ist das erste Sicherheitsmerkmal ein diffraktives optisches Element, das aus einem durchtretenden Strahl im Wesentlichen parallelen Lichts in Reflexion ein mit einem Schirm auffangbares Projektionsbild erzeugt. Zusätzlich ist das zweite Sicherheitsmerkmal ein diffraktives optisches Element, das aus einem durchtretenden Strahl im Wesentlichen parallelen Lichts in Transmission ein mit einem Schirm auffangbares Projektionsbild erzeugt.

Die diffraktiven optischen Elemente des ersten und zweiten Sicherheitselements sind vorzugsweise auf Licht derselben vorbestimmten Wellenlänge ausgelegt.

Auch bei diesem Erfindungsaspekt kann das diffraktive optische Element des ersten und/ oder zweiten Sicherheitselements eine in einem strahlungshärtenden oder thermoplastischen Lack ausgebildete Prägestruktur enthalten und kann durch eine hochbrechende Schutzschicht eingeebnet sein. Jedes diffraktive optische Element ist zweckmäßig aus einer Mehrzahl diffraktiver Elementarzellen gebildet ist, die eine laterale Abmessung unterhalb von 1 mm, vorzugsweise zwischen 3 µm und 100 µm aufweisen.

Das erste Sicherheitsmerkmal enthält bei diesem Erfindungsaspekt vorzugsweise eine semitransparente Metallschicht, insbesondere eine dünne Aluminium-, Chrom-, Silber- oder Kupferschicht, so dass das erste Sicherheitsmerkmal einerseits in Reflexion eingesetzt werden kann, andererseits jedoch ausreichend Licht für das zweite Sicherheitsmerkmal durchlässt.

Die Erfindung umfasst auch Verfahren zum Herstellen eines Durchsichtssicherheitselements für Sicherheitspapiere, Wertdokumente und dergleichen, sowie ein Sicherheitspapier und ein Wertdokument mit einem Durchsichtssicherheitselement der beschriebenen Art. Dabei ist das Durchsichtssicherheitselement vorzugsweise in oder über einem Fensterbereich oder einer durchgehenden Öffnung des Sicherheitspapiers bzw. des Wertdokuments angeordnet. Bei dem Wertdokument kann es sich insbesondere um eine Banknote, einen Pass, eine Banderole, eine Urkunde oder eine Karte, insbesondere eine Ausweiskarte handeln.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
Fig. 1 eine schematische Darstellung einer Banknote mit einem erfindungsgemäßen Durchsichtssicherheitselement,
Fig. 2 einen Querschnitt durch ein Durchsichtssicherheitselement nach einem Ausführungsbeispiel der Erfindung,
Fig. 3 in (a) und (b) die Verifizierung der beiden Sicherheitsmerkmale des Durchsichtssicherheitselements der Fig. 2,
Fig. 4 bis 6 Querschnitte durch Durchsichtssicherheitselemente nach weiteren Ausführungsbeispielen der Erfindung,
Fig. 7 in (a) ein Prägehologramm mit einem kontinuierlichen Oberflächenprofil, in (b) ein Prägehologramm mit einer Binärstruktur und in (c) ein Prägehologramm mit einer Multilevelstruktur,
Fig.8 einen Querschnitt durch ein Durchsichtssicherheitselement nach einem weiteren Ausführungsbeispiel der Erfindung, und
Fig. 9 die Verifizierung der beiden Sicherheitsmerkmale des Durchsichtssicherheitselements der Fig. 8.

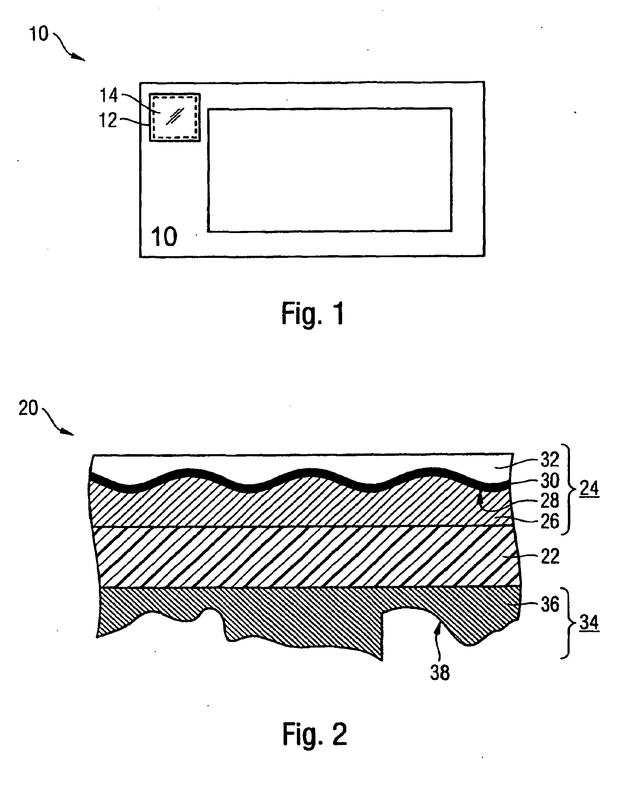

Die Erfindung wird nun am Beispiel eines Sicherheitselements für eine Banknote erläutert. Fig. 1 zeigt dazu eine schematische Darstellung einer Banknote 10 mit einem Durchsichtssicherheitselement 12, das über einem Durchsichtsbereich 14, etwa einem Fensterbereich oder einer durchgehenden Öffnung der Banknote 10 angeordnet ist.

Wie nachfolgend genauer erläutert, weist das Durchsichtssicherheitselement 12 auf seinen gegenüberliegenden Seiten sowohl ein nur mit Hilfsmitteln prüfbares Sicherheitsmerkmal zweiter Stufe als auch ein mit bloßem Auge erkennbares Sicherheitsmerkmal erster Stufe auf. Dadurch verbindet das Durchsichtssicherheitselement 12 hohe Fälschungssicherheit mit einer visuell ansprechenden Erscheinung für den Betrachter.

Das Ausführungsbeispiel der Fig. 2 zeigt ein Durchsichtssicherheitselement 20 mit einer zentralen Trägerfolie 22, beispielsweise einer PET-Folie. Als ein mit bloßem Auge erkennbares Sicherheitsmerkmal erster Stufe ist auf der Oberseite der Trägerfolie ein semitransparentes Prägehologramm 24 angeordnet. Das Prägehologramm 24 umfasst eine Schicht eines strahlungshärtenden Lacks 26 mit einer Prägestruktur 28 und eine auf die Prägestruktur 28 aufgebrachte semitransparente Metallschicht 30, die beispielsweise durch eine Aluminiumschicht einer Dicke zwischen 5 nm und 30 nm gebildet sein kann. Anstelle von Aluminium kommt selbstverständlich auch der Einsatz anderer Metalle, beispielsweise von Chrom, Silber oder Kupfer infrage, wobei die Schichtdicke je nach verwendetem Material geeignet gewählt wird. Um das Prägehologramm 24 vor unerlaubter Abformung und vor chemischen Angriffen während des Umlaufs zu schützen, wird es mit einem lichtdurchlässigen Schutzlack 32 eingeebnet. Wird das Material der Schutzlackschicht 32 so gewählt, dass ihr Brechungsindex im Wesentlichen dem Brechungsindex der Lackschicht 26 entspricht, so verhindert die Schutzlackschicht 32 darüber hinaus, dass transmittierte Wellenfronten eine lokal variierende Phasenmodulation erleiden.

Die gegenüberliegende Seite der Trägerfolie 22 trägt ein nur mit Hilfsmitteln prüfbares Sicherheitsmerkmal zweiter Stufe, wobei im Ausführungsbeispiel der Fig. 2 ein diffraktives optisches Element 34 verwendet ist. Das diffraktive optische Element 34 besteht aus einer strahlungshärtenden Lackschicht 36, in die ein charakteristisches Oberflächenprofil 38 eingeprägt ist, welches aus einem durchtretenden parallelen Lichtstrahl in Transmission ein mit einem Schirm auffangbares Projektionsbild erzeugt und so als Strahlformer wirkt. Das charakteristische Oberflächenprofil 38 kann dabei bei Vorgabe des zu erzeugenden Projektionsbilds und der Auslegungswellenlänge des bei der Rekonstruktion verwendeten Lasers beispielsweise mithilfe eines Computers berechnet werden.

Besonders gut kann das diffraktive optische Element wirken, wenn der Brechungsindex der Lackschicht 26 mit dem Brechungsindex der Schutzlackschicht 32 übereinstimmt, da das auf der Oberseite der Trägerfolie 22 angeordnete semitransparente Prägehologramm 24 dann keine lokale Phasenvariation der durch das Durchsichtssicherheitselement 12 laufenden Wellenfront bewirkt, sondern lediglich zu einer gewissen Schwächung der Gesamtintensität des durchlaufenden Lichtstrahls führt.

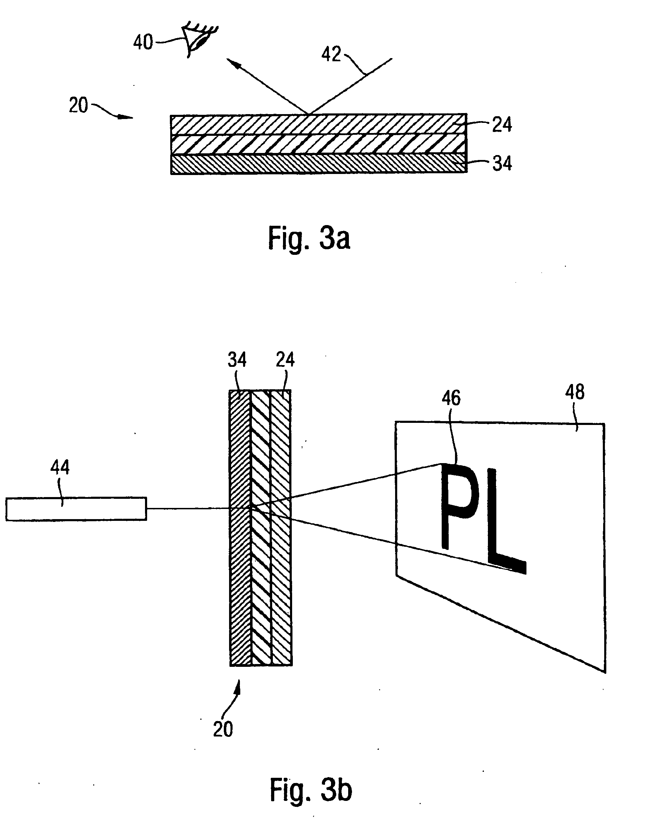

Die Verifizierung der beiden Sicherheitsmerkmale 24 und 34 ist in Fig. 3 veranschaulicht. Wird das Durchsichtssicherheitselement 20 von der Seite des ersten Sicherheitsmerkmals 24 in Reflexion 42 betrachtet, wie in Fig. 3(a) gezeigt, so tritt für den Betrachter 40 das semitransparente Prägehologramm 24 gut sichtbar in Erscheinung. Das Prägehologramm 24 kann dabei nicht nur ein statisches Bild erzeugen, sondern auch ein Wechselbild, wie etwa ein Kippbild, ein Pumpbild, ein Bewegungsbild, ein Morphbild oder ein Stereobild darstellen. Das transparente Durchsichtssicherheitselement 20 wird dadurch optisch stark aufgewertet und präsentiert sich auf der Banknote 10 nicht als uninteressante, strukturlose Transparenzfolie, sondern vielmehr bewegungs- und/oder farbenreich und mit visuell ansprechendem Sinneseindruck.

Die im zweiten Sicherheitsmerkmal 34 codierte, versteckte Bildinformation ist mit bloßem Auge ohne Hilfsmittel nicht zu erkennen. Das Sicherheitsmerkmal 34 macht sich für das unbewaffnete Auge lediglich als leichte Trübung des semitransparenten Prägehologramms 24 bemerkbar, wenn das Sicherheitselement 20 von der Rückseite her betrachtet wird. Wird das Durchsichtssicherheitselement 20 allerdings von der Seite des zweiten Sicherheitsmerkmals 34 her mit einem Laserstrahl 44 vorgegebener Wellenlänge durchstrahlt, wie in Fig. 3(b) gezeigt, so erzeugt das Oberflächenprofil 38 des diffraktiven optischen Elements aus dem parallelen Lichtstrahl ein Projektionsbild 46, das etwa mit einem Projektionsschirm 48 aufgefangen werden kann. In anderen Ausführungsformen kann vorgesehen sein, dass das projizierte Bild seitenrichtig erscheint, wenn das Durchsichtssicherheitselement 20 von der Seite des ersten Sicherheitsmerkmals 24 her durchstrahlt wird. Es versteht sich, dass insbesondere auch spiegelsymmetrische Bildmotive eingesetzt werden können oder Bildmotive ohne festgelegte Seitenorientierung, so dass die versteckte Bildinformation des Sicherheitselements 20 unabhängig von der beaufschlagten Seite korrekt erkannt werden kann.

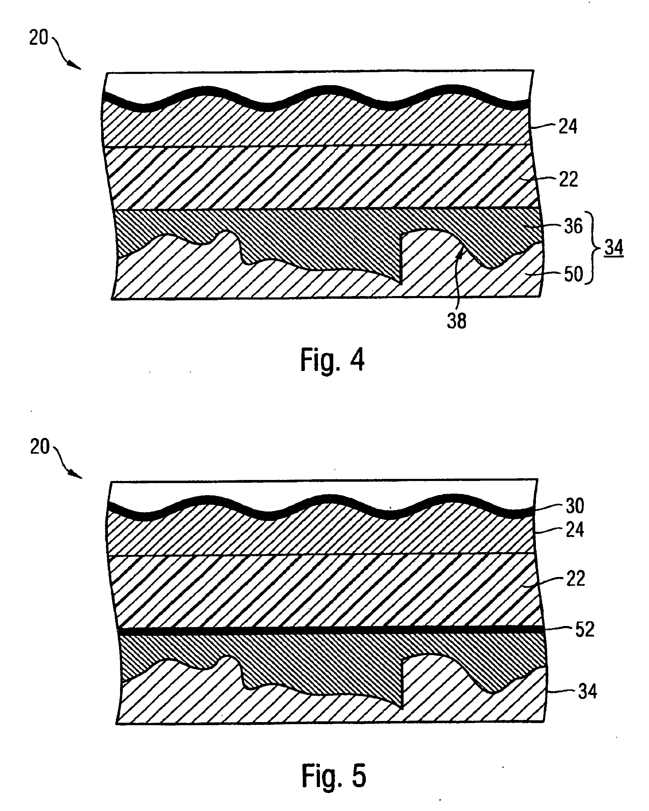

Die Fälschungssicherheit des Durchsichtssicherheitselements 20 der Fig. 2 lässt sich weiter erhöhen, wenn das Oberflächenprofil 38 des diffraktiven optischen Elements 34 mit einem Material 50 mit sehr hohem Brechungsindex eingeebnet wird, wie in Fig. 4 gezeigt. Dabei versteht sich, dass die Differenz der Brechungsindices der Lackschicht 36 und der Materialschicht 50 bei der Auslegung des charakteristischen Oberflächenprofils 38 entsprechend berücksichtigt wird.

Das diffraktive optische Element 34 tritt bei der Betrachtung des Prägehologramms 24 von der Rückseite her als leichte Trübung in Erscheinung. Es kann daher in manchen Gestaltungen vorteilhaft sein, das Prägehologramm 24 von dieser Seite ganz abzudecken, so dass es nur von der Vorderseite her gut sichtbar ist. Dazu kann, wie in Fig. 5 gezeigt, beispielsweise eine weitere semitransparente Metallschicht 52 auf eine der beiden Oberflächen der Trägerfolie 22 aufgebracht werden. Die beiden semitransparenten Metallschichten 30 und 52 sind dabei so auszulegen, dass das Durchsichtssicherheitselement 20 noch eine ausreichend hohe Lichtdurchlässigkeit aufweist, um die Projektion des im diffraktiven optischen Element 34 codierten Projektionsbilds bei Durchleuchtung mit der Laserquelle zu ermöglichen.

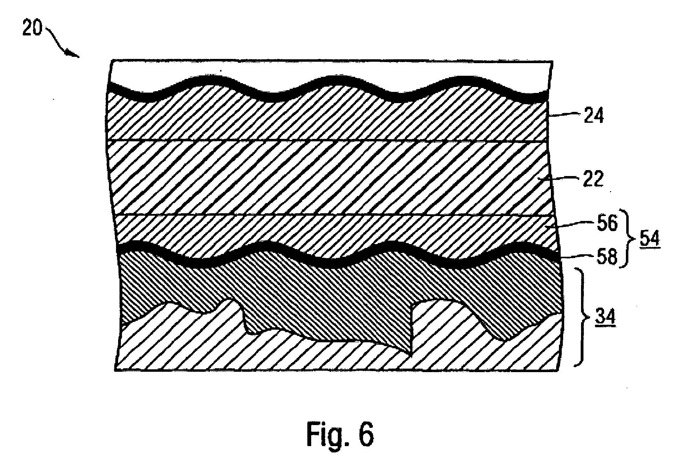

Wie anhand des Ausführungsbeispiels der Fig. 6 gezeigt, kann anstelle einer ebenen semitransparenten Metallschicht auch ein zweites semitransparentes Prägehologramm 54 aus einer Prägelackschicht 56 und einer zweiten semitransparenten Metallschicht 58 zum Einsatz kommen. Das zweite Prägehologramm 54 kann beispielsweise zwischen der Trägerfolie 22 und dem diffraktiven optischen Element 34 angeordnet sein. Von der ersten, dem diffraktiven optischen Element abgewandten Seite des Durchsichtssicherheitselements 20 her betrachtet, ist dann im Wesentlichen nur das erste Prägehologramm 24 zu erkennen, während von der zweiten, dem diffraktiven optischen Element zugewandten Seite des Durchsichtssicherheitselements 20 her betrachtet, im Wesentlichen nur das zweite Prägehologramm 54 sichtbar ist. Bei geeigneter Wahl der Dicken der jeweiligen Metallschichten können sich die von den Prägehologrammen 24, 54 dargestellten Bildinformationen in Reflexion auch zu einem Gesamtbild ergänzen.

Die semitransparente Metallschicht 30 des Prägehologramms 24 kann zu einer deutlichen Verringerung der Lichtdurchlässigkeit des Durchsichtssicherheitselements 20 führen. Als Alternative bietet es sich deshalb an, anstelle der semitransparenten Metallschicht 30 eine hochbrechende Schicht, beispielsweise eine ZnS-Schicht mit einer Dicke von etwa 50 nm zu verwenden, wodurch das Durchsichtssicherheitselement wesentlich transparenter wird und der Durchsichtscharakter dieses Sicherheitselements dem Betrachter sofort ins Auge fällt. Diese Maßnahme hat außerdem zur Folge, dass die Erkennbarkeit des Prägehologramms 24 von den Umgebungsbedingungen abhängt: Beim Blick durch das Fenster gegen einen hellen Hintergrund ist das Hologramm 24 nur schwach zu sehen, während es sich gegen einen dunklen Hintergrund wesentlich stärker abhebt. Das mit einem Laser projizierte Bild des diffraktiven optischen Elements 34 erscheint auf dem Beobachtungsschirm noch intensiver.

Darüber hinaus lassen sich anstelle der semitransparenten Metallschicht 30 auch Schichtsysteme einsetzen, die aufgrund von Interferenzeffekten blickwinkelabhängige Farbverschiebungen verursachen. Als zwei Beispiele seien ein Schichtsystem genannt, in welchem ein Material mit niedrigem Brechungsindex von zwei Schichten mit höherem Brechungsindex eingeschlossen ist, sowie ein Schichtsystem mit der Abfolge semitransparentes Metall - Dielektrikum - semitransparentes Metall. Alternativ zum Schichtsystem kann auch eine Schicht aus flüssigkristallinem Material mit Farbkippeffekt verwendet werden.

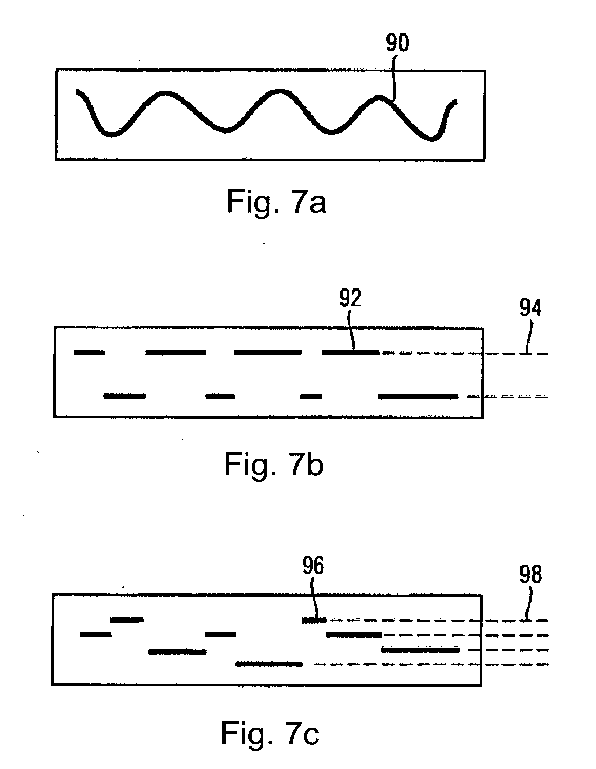

In allen Ausgestaltungen kann die semitransparente Metallschicht oder die hochbrechende Beschichtung des Prägehologramms ein kontinuierliches Oberflächenprofil 90 aufweisen, wie schematisch in Fig. 7(a) gezeigt. In anderen Gestaltungen bietet es sich an, die Prägestruktur nicht kontinuierlich, sondern mit einer bestimmten Anzahl an diskreten Höhenstufen auszubilden. Den einfachsten Fall stellt dabei eine Binärstruktur mit nur zwei Höhenstufen 94 dar, wie sie in Fig. 7(b) gezeigt ist. Eine derartige Binärstruktur weist nur ebene Flächenabschnitte 92 auf, die auf einer von zwei verschiedenen Höhenstufen 94 angeordnet sind.

Im allgemeineren Fall besitzt eine Multilevelstruktur ebene Flächenabschnitte 96 auf n verschiedenen Höhenniveaus 98, wie in Fig. 7(c) gezeigt. Im Vergleich zu einem kontinuierlichen Oberflächenprofil 90 ergibt sich daraus der Vorteil, dass ein senkrecht durch das Sicherheitselement tretender Lichtstrahl an allen Stellen des Elements dieselbe Schwächung erfährt, weil der Lichtstrahl unabhängig vom Einfallspunkt die Metallschicht immer senkrecht durchdringt und damit immer dieselbe Schichtdicke sieht.

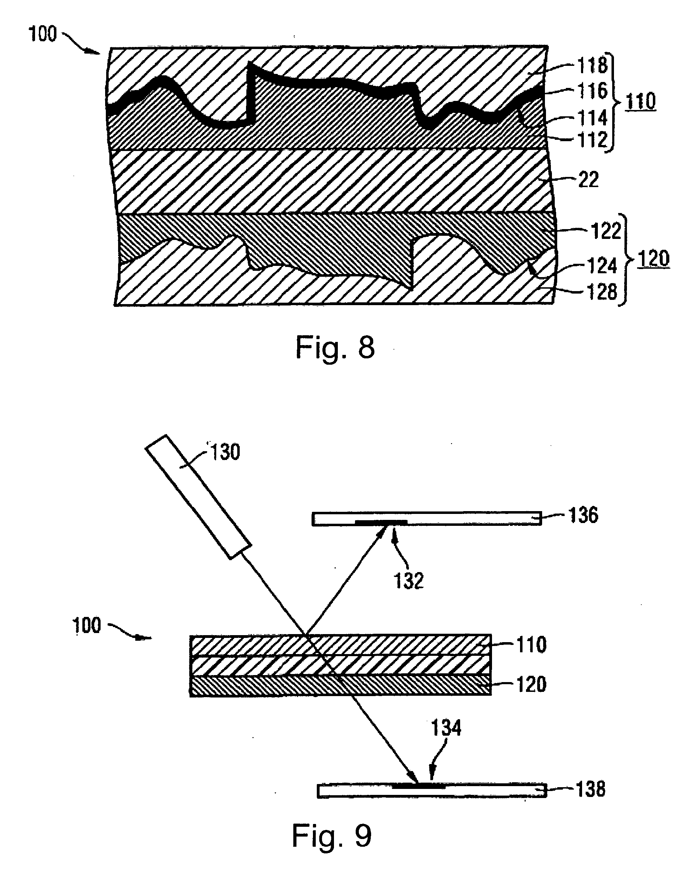

In weiteren Ausführungsbeispielen der Erfindung wird als erstes Sicherheitsmerkmal anstelle eines Prägehologramms ein in Reflexion strahlformendes Sicherheitsmerkmal eingesetzt, wie in den Figuren 8 und 9 illustriert.

Bei dem Durchsichtssicherheitselement 100 der Fig. 8 ist die Trägerfolie 22 auf beiden Seiten mit diffraktiven optischen Elementen 110,120 versehen, die jeweils eine strahlungsgehärtete Lackschicht 112,122 aufweisen, in die ein charakteristisches, strahlformendes Oberflächenprofil 114,124 eingeprägt ist. Die Lackschicht 112 des ersten diffraktiven optischen Elements 110 ist zusätzlich mit einer semitransparenten Metallisierung 116 versehen, um das diffraktive optische Element 110 in Reflexion einsetzen zu können. Die Gestaltung des zweiten diffraktiven optischen Elements 120 entspricht der bereits im Zusammenhang mit Fig. 4 erläuterten Gestaltung. Zum Schutz vor Abformung und zur Vermeidung von Verzerrungen der Phasen der Wellenfronten sind die beiden diffraktiven optischen Elemente 110,120 mit einem Material 118,128 mit hohem Brechungsindex eingeebnet.

Bei Beleuchtung des Sicherheitselements 100 aus dem Halbraum der Seite des ersten Sicherheitsmerkmals 110 mit einem Laser 130 (Fig. 9) wird durch das reflektierende diffraktive optische Element 110 ein erstes Bild 132 in den Halbraum des ersten Sicherheitsmerkmals 110 projiziert. Der durchgehende Anteil der einfallenden Strahlung dient dazu, ein durch das in Transmission eingesetzte diffraktive optische Element 120 erzeugtes zweites Bild 134 in den Halbraum des zweiten Sicherheitsmerkmals 120 zu projizieren. Die Bilder 132, 134 können jeweils von einem Projektionsschirm 136, 138 oder auch von einem gemeinsamen Projektionsschirm aufgefangen werden. Anders als bei den weiter oben beschriebenen Beispielen stellen die Sicherheitsmerkmale 110,120 auf Vorder- und Rückseite des Sicherheitselements 100 jeweils Sicherheitsmerkmale zweiter Stufe dar, da sie nur unter Verwendung von Hilfsmittel erkannt werden können.

Die beiden diffraktiven optischen Elemente 110,120 können auf Licht derselben oder auch auf Licht unterschiedlicher Wellenlängen ausgelegt sein, so dass im letztgenannten Fall zwei verschiedene Laserquellen zur vollständigen Rekonstruktion der beiden Projektionsbilder erforderlich sind.

Für die Herstellung der erfindungsgemäßen Durchsichtssicherheitselemente kann beispielsweise folgendermaßen vorgegangen werden:

### Origination:

Die Origination der als erste Sicherheitsmerkmale eingesetzten Prägehologramme kann nach den im Stand der Technik beschriebenen Verfahren erfolgen, wobei bevorzugt eine E-Beam-Anlage eingesetzt wird.

Die refraktiven optischen Elemente können beispielsweise mit Grauton-Lithographie mithilfe von Masken oder durch Direktbelichtung mit einem Laser- oder Elektronenstrahlschreiber in Lack belichtet und anschließend entwickelt werden. Falls die erreichbare Profiltiefe nicht ausreicht, kann das Relief auch mithilfe geeigneter Trockenätzverfahren in ein Substratmaterial übertragen werden, wobei die Profiltiefe entsprechend erhöht werden kann. In anderen Herstellungsvarianten kann das Substrat mit geeigneten Verfahren direkt bearbeitet werden, ohne auf Lackschichten zurückzugreifen. Lediglich beispielhaft sei dazu das Verfahren der Laserablation genannt. Auch andere dem Fachmann bekannte Verfahren zur Erstellung kontinuierlicher Oberflächenstrukturen kommen infrage.

Für die Origination der diffraktiven optischen Elementstrukturen können die zur Darstellung eines bestimmten Bildinhalts benötigten Oberflächenstrukturen mit einem Computer auf Basis des sogenannten Iterative Fourier Transform-Algorithmus berechnet werden. Die Wellenlänge des zur Projektion vorgesehenen Lasers bestimmt die Tiefe und Skalierung der berechneten Oberfläche. Anschließend werden die Strukturen zum Beispiel mit einem Laserwriter in Resist belichtet und das nach dem Entwickeln freigelegte Oberflächenprofil abgeformt. Dieses Verfahren eignet sich besonders gut zur Herstellung kontinuierlicher Oberflächen. Soll ein Multilevel-Profil generiert werden, so empfiehlt es sich, mit E-Beam-Lithographie m Masken für die optische Lithographie anzufertigen. Mit deren Hilfe können n = 2^{m} Höhenstufen erzeugt werden, indem sukzessive m Schritte optischer Lithographie, jeweils gefolgt von einem Trockenätzprozess vorbestimmter Tiefe, durchgeführt werden.

### Vervielfältigung:

Für die verschiedenen Oberflächenprofile werden durch galvanisches Abformen Prägewerkzeuge hergestellt, beispielsweise Prägezylinder. Mit deren Hilfe werden die Strukturen in UV-Lack geprägt und durch Bestrahlung mit UV-Licht gehärtet. Alternativ kommt die Prägung in thermoplastisch prägbare Lacke infrage.

Das Aufbringen der semitransparenten Metallschichten bzw. der hochbrechenden ZnS-Schicht oder des Interferenz-Schichtsystems erfolgt bevorzugt durch Verdampfen, aber auch andere Methoden wie Kathodenzerstäubung sind anwendbar.

Zur Realisierung der beidseitigen Prägestrukturen wird zunächst die erste Seite der Folie geprägt und bedampft, ehe die zweite Seite mit den entsprechenden anderen Strukturen ausgestattet wird. Alternativ können zwei verschiedene Folien mit den benötigten Prägestrukturen versehen und anschließend zusammenkaschiert werden.

### Passerhaltigkeit:

Wenn die auf der zweiten Seite des Sicherheitselements befindlichen Strukturen, also die diffraktiven bzw. refraktiven optische Elemente, aus periodisch angeordneten, identischen Elementarzellen mit Ausdehnungen deutlich unter 1 mm bestehen, spielt eine Passerhaltigkeit zwischen diesen Strukturen und den Strukturen auf der ersten Seite keine Rolle. Diese Ausführungsform wird bevorzugt, wenn beispielsweise eine Bewegung des Lasers über die Fläche des Sicherheitsmerkmals zu keiner Änderung des projizierten Bildes führen soll.

Allerdings kann es das spezielle Design des Sicherheitselements auch erforderlich machen, dass die Positionen der Strukturen auf der ersten Seite des Sicherheitselements und des diffraktiven bzw. refraktiven optischen Elements auf der zweiten Seite einander entsprechen. Dieser Fall kann beispielsweise dann eintreten, wenn das diffraktive bzw. refraktive optische Element Lauf- oder Morph-Effekte generiert, die Strahlformung also nicht über der gesamten Fläche des Sicherheitselements auf gleiche Weise erfolgen soll. In diesem Fall ändert sich das projizierte Bild, wenn der Laser über die Fläche des Sicherheitsmerkmals geführt wird. Sowohl das Prägehologramm, als auch das strahlformende Element auf der gegenüberliegenden Seite des Sicherheitselements müssen in diesem Fall mit ausreichender Präzision im Durchsichtsfenster platziert werden. Die Einhaltung der Positionierungstoleranzen stellt im Allgemeinen hohe Ansprüche an die eingesetzten Fertigungsprozesse, was wiederum in einer hohen Fälschungssicherheit des Sicherheitselements resultiert.

## Patentansprüche

1. Durchsichtssicherheitselement für Sicherheitspapiere, Wertdokumente und dergleichen, das zumindest ein erstes und ein zweites Sicherheitsmerkmal aufweist, die auf gegenüberliegenden Seiten des Sicherheitselements angeordnet sind, **dadurch gekennzeichnet, dass**
- das erste Sicherheitsmerkmal ein in Reflexion erkennbares Sicherheitsmerkmal mit einem elektromagnetische Strahlung beeinflussenden Gittermuster aus einer Vielzahl von Strichgitterlinien ist, wobei das erste Sicherheitsmerkmal eine in einem strahlungshärtenden oder thermoplastischen Lack ausgebildete Prägestruktur enthält, und die Prägestruktur mit einer semitransparenten Metallschicht oder mit einer hochbrechenden Schicht beschichtet ist oder die Prägestruktur mit einem Dünnschichtelement mit Farbkippeffekt versehen ist,
- das zweite Sicherheitsmerkmal ein in Transmission strahlformendes optisches Element ist, wobei das zweite Sicherheitsmerkmal ein diffraktives optisches Element ist, das aus einem durchtretenden Strahl im Wesentlichen parallelen Lichts in Transmission ein mit einem Schirm auffangbares Projektionsbild erzeugt, und dass
- die Prägestruktur und die Beschichtung durch eine lichtdurchlässige Schutzlackschicht eingeebnet sind, wobei der Brechungsindex der Schutzlackschicht im Wesentlichen dem Brechungsindex der Lackschicht entspricht, in die die Prägestruktur eingebracht ist.

2. Durchsichtssicherheitselement nach Anspruch 1, **dadurch gekennzeichnet, dass** das erste Sicherheitsmerkmal eine diffraktive Beugungsstruktur, insbesondere ein Hologramm, ein holographisches Gitterbild, eine geblazede Beugungsstruktur, ein computergeneriertes Hologramm (CGH) oder eine andere hologrammähnliche Beugungsstruktur darstellt.

3. Durchsichtssicherheitselement nach Anspruch 1, **dadurch gekennzeichnet, dass** das erste Sicherheitsmerkmal eine Mattstruktur darstellt.

4. Durchsichtssicherheitselement nach wenigstens einem der Ansprüche 1 bis 3, **dadurch gekennzeichnet, dass** das Gittermuster des ersten Sicherheitsmerkmals aus einer Vielzahl von Gitterlinien mit vorzugsweise sinusförmigem Profil besteht, wobei der Abstand und die Orientierung der Gitterlinien über der Fläche des Sicherheitsmerkmals variieren, um einen gewünschten optischen Effekt zu erzeugen.

5. Durchsichtssicherheitselement nach wenigstens einem der Ansprüche 1 bis 4, **dadurch gekennzeichnet, dass** die Prägestruktur mit einer semitransparenten Metallschicht in Form einer dünnen Aluminium-, Chrom-, Silber- oder Kupferschicht oder mit einer hochbrechenden Schicht in Form einer dünnen ZnS-Schicht beschichtet ist.

6. Durchsichtssicherheitselement für Sicherheitspapiere, Wertdokumente und dergleichen, das zumindest ein erstes und ein zweites Sicherheitsmerkmal aufweist, die auf gegenüberliegenden Seiten des Sicherheitselements angeordnet sind, **dadurch gekennzeichnet, dass**
- das erste Sicherheitsmerkmal ein semitransparentes, in Reflexion strahlformendes optisches Element ist, wobei das erste Sicherheitsmerkmal ein diffraktives optisches Element ist, das aus einem durchtretenden Strahl im Wesentlichen parallelen Lichts in Reflexion ein mit einem Schirm auffangbares Projektionsbild erzeugt, und
- das zweite Sicherheitsmerkmal ein in Transmission strahlformendes optisches Element ist, wobei das zweite Sicherheitsmerkmal ein diffraktives optisches Element ist, das aus einem durchtretenden Strahl im Wesentlichen parallelen Lichts in Transmission ein mit einem Schirm auffangbares Projektionsbild erzeugt.

7. Durchsichtssicherheitselement nach Anspruch 6, **dadurch gekennzeichnet, dass** das erste Sicherheitsmerkmal eine semitransparente Metallschicht, vorzugsweise eine dünne Aluminium-, Chrom-, Silber- oder Kupferschicht enthält.

8. Durchsichtssicherheitselement nach wenigstens einem der Ansprüche 1 bis 7, **dadurch gekennzeichnet, dass** das Sicherheitselement weiter in zumindest einem Teilbereich einen Gitterpolarisator enthält, der ein Substrat mit einer ersten Oberfläche aufweist, in die eine Reliefstruktur eingebracht ist, wobei
- die Reliefstruktur eine Anordnung von elektrisch leitfähigen, parallelen Gitterlinien mit einer vorbestimmten Gitterkonstante und Gitterorientierung aufweist, die durch im Wesentlichen nichtleitende Zwischenräume voneinander getrennt sind, und
- die Gitterkonstante der Gitterlinien so gewählt ist, dass der Gitterpolarisator die Polarisation des auf die Gitterlinien auftreffenden Lichts verändert, so dass das reflektierte und/oder das transmittierte Licht in einer vorbestimmten Ebene linear polarisiert ist.

9. Verfahren zum Herstellen eines Durchsichtssicherheitselements für Sicherheitspapiere, Wertdokumente und dergleichen, bei dem eine transparente Trägerfolie auf gegenüberliegenden Seiten mit einem ersten und einem zweiten Sicherheitsmerkmal versehen wird, wobei
- als erstes Sicherheitsmerkmal ein in Reflexion erkennbares Sicherheitsmerkmal mit einem elektromagnetische Strahlung beeinflussenden Gittermuster aus einer Vielzahl von Strichgitterlinien erzeugt wird, wobei das erste Sicherheitsmerkmal mit einer in einem strahlungshärtenden oder thermoplastischen Lack ausgebildeten Prägestruktur erzeugt wird, und die Prägestruktur mit einer semitransparenten Metallschicht oder mit einer hochbrechenden Schicht beschichtet wird oder die Prägestruktur mit einem Dünnschichtelement mit Farbkippeffekt versehen wird,
- als zweites Sicherheitsmerkmal ein in Transmission strahlformendes optisches Element erzeugt wird, wobei das zweite Sicherheitsmerkmal ein diffraktives optisches Element ist, das aus einem durchtretenden Strahl im Wesentlichen parallelen Lichts in Transmission ein mit einem Schirm auffangbares Projektionsbild erzeugt, und wobei
- die Prägestruktur und die Beschichtung durch eine lichtdurchlässige Schutzlackschicht eingeebnet werden, wobei der Brechungsindex der Schutzlackschicht im Wesentlichen dem Brechungsindex der Lackschicht entspricht, in die die Prägestruktur eingebracht wird.

10. Verfahren zum Herstellen eines Durchsichtssicherheitselements für Sicherheitspapiere, Wertdokumente und dergleichen, bei dem eine transparente Trägerfolie auf gegenüberliegenden Seiten mit einem ersten und einem zweiten Sicherheitsmerkmal versehen wird, wobei
- als erstes Sicherheitsmerkmal ein semitransparentes, in Reflexion strahlformendes optisches Element erzeugt wird, wobei das erste Sicherheitsmerkmal ein diffraktives optisches Element ist, das aus einem durchtretenden Strahl im Wesentlichen parallelen Lichts in Reflexion ein mit einem Schirm auffangbares Projektionsbild erzeugt, und
- als zweites Sicherheitsmerkmal ein in Transmission strahlformendes optisches Element erzeugt wird, wobei das zweite Sicherheitsmerkmal ein diffraktives optisches Element ist, das aus einem durchtretenden Strahl im Wesentlichen parallelen Lichts in Transmission ein mit einem Schirm auffangbares Projektionsbild erzeugt.

11. Sicherheitspapier mit einem Durchsichtssicherheitselement nach einem der Ansprüche 1 bis 8, **dadurch gekennzeichnet, dass** das Durchsichtssicherheitselement in oder über einem Fensterbereich oder einer durchgehenden Öffnung des Sicherheitspapiers angeordnet ist.

12. Wertdokument mit einem Durchsichtssicherheitselement nach einem der Ansprüche 1 bis 8 oder einem Sicherheitspapier nach Anspruch 11, **dadurch gekennzeichnet, dass** das Durchsichtssicherheitselement in oder über einem Fensterbereich oder einer durchgehenden Öffnung des Wertdokuments angeordnet ist.

## Claims

1. A see-through security element for security papers, value documents and the like that exhibits at least a first and a second security feature that are arranged on opposing sides of the security element, **characterized in that**
- the first security feature is a security feature that is perceptible in reflection and that has an electromagnetic-radiation-influencing grating pattern composed of a plurality of grating lines, wherein the first security feature includes an embossing pattern that is formed in a radiation-curing or thermoplastic lacquer, and that the embossing pattern is coated with a semitransparent metal layer or with a high-index layer, or the embossing pattern is provided with a thin-film element having a color-shift effect,
- the second security feature is an optical element that is beam-shaping in transmission, wherein the second security feature is a diffractive optical element that, in transmission, produces from a penetrating beam of substantially parallel light a projection image that is detectable with a screen, and that
- the embossing pattern and the coating are leveled by a light-transmitting protective lacquer layer, wherein the refractive index of the protective lacquer layer substantially corresponds to the refractive index of the lacquer layer into which the embossing pattern is introduced.

2. The see-through security element according to claim 1, **characterized in that** the first security feature constitutes a diffraction pattern, especially a hologram, a holographic grating image, a blazed diffraction pattern, a computer-generated hologram (CGH) or another hologram-like diffraction pattern.

3. The see-through security element according to claim 1, **characterized in that** the first security feature constitutes a matte pattern.

4. The see-through security element according to at least one of claims 1 to 3, **characterized in that** the grating pattern of the first security feature consists of a plurality of grating lines having a preferably sinusoidal profile, the spacing and the orientation of the grating lines varying across the area of the security feature to produce a desired optical effect.

5. The see-through security element according to at least one of claims 1 to 4, **characterized in that** the embossing pattern is coated with a semitransparent metal layer in form of a thin aluminum, chrome, silver or copper layer, or with a high-index layer in form of a thin ZnS layer.

6. A see-through security element for security papers, value documents and the like that exhibits at least a first and a second security feature that are arranged on opposing sides of the security element, **characterized in that**
- the first security feature is a semitransparent optical element that is beam-shaping in reflection, wherein the first security feature is a diffractive optical element that, in reflection, produces from a penetrating beam of substantially parallel light a projection image that is detectable with a screen, and
- the second security feature is an optical element that is beam-shaping in transmission, wherein the second security feature is a diffractive optical element that, in transmission, produces from a penetrating beam of substantially parallel light a projection image that is detectable with a screen.

7. The see-through security element according to claim 6, **characterized in that** the first security feature includes a semitransparent metal layer, preferably a thin aluminum, chrome, silver or copper layer.

8. The see-through security element according to at least one of claims 1 to 7, **characterized in that** the security element further includes, in at least one sub-region, a grating polarizer that exhibits a substrate having a first surface into which a relief pattern is introduced, wherein
- the relief pattern exhibits an arrangement of electrically conductive, parallel grating lines that have a predetermined grating constant and grating orientation and that are separated from one another by substantially non-conductive spaces, and
- the grating constant of the grating lines is chosen such that the grating polarizer changes the polarization of the light impinging on the grating lines such that the reflected and/ or the transmitted light is linearly polarized in a predetermined plane.

9. A method for manufacturing a see-through security element for security papers, value documents and the like, in which a transparent substrate foil is provided on opposing sides with a first and a second security feature, wherein
- as the first security feature, a security feature is produced that is perceptible in reflection and that has an electromagnetic-radiation-influencing grating pattern composed of a plurality of grating lines, wherein the first security feature is produced with an embossing pattern that is formed in a radiation-curing or thermoplastic lacquer, and the embossing pattern is coated with a semitransparent metal layer or with a high-index layer, or the embossing pattern is provided with a thin-film element having a color-shift effect,
- as the second security feature, an optical element is produced that is beam-shaping in transmission, wherein the second security feature is a diffractive optical element that, in transmission, produces from a penetrating beam of substantially parallel light a projection image that is detectable with a screen, and wherein
- the embossing pattern and the coating are leveled by a light-transmitting protective lacquer layer, wherein the refractive index of the protective lacquer layer substantially corresponds to the refractive index of the lacquer layer into which the embossing pattern is introduced.

10. A method for manufacturing a see-through security element for security papers, value documents and the like, in which a transparent substrate foil is provided on opposing sides with a first and a second security feature, wherein
- as the first security feature, a semitransparent optical element is produced that is beam-shaping in reflection, wherein the first security feature is a diffractive optical element that, in reflection, produces from a penetrating beam of substantially parallel light a projection image that is detectable with a screen, and
- as the second security feature, an optical element is produced that is beam-shaping in transmission, wherein the second security feature is a diffractive optical element that, in transmission, produces from a penetrating beam of substantially parallel light a projection image that is detectable with a screen.

11. A security paper having a see-through security element according to one of claims 1 to 8, **characterized in that** the see-through security element is arranged in or over a window region or a through opening in the security paper.

12. A value document having a see-through security element according to one of claims 1 to 8 or a security paper according to claim 11, **characterized in that** the see-through security element is arranged in or over a window region or a through opening in the value document.

## Revendications

1. Elément de sécurité transparent pour papiers de sécurité, documents de valeur et analogues, qui comprend au moins une première et une deuxième caractéristiques de sécurité, qui sont disposées sur des côtés opposés de l'élément de sécurité, **caractérisé en ce que**
- la première caractéristique de sécurité est une caractéristique de sécurité reconnaissable en réflexion, comportant un modèle de réseau influençant le rayonnement électromagnétique, constitué d'un grand nombre de traits de réseau, la première caractéristique de sécurité contenant une structure gaufrée, réalisée dans un vernis thermoplastique ou durcissant sous l'effet d'un rayonnement, et la structure gaufrée est revêtue d'une couche métallique semi-transparente ou d'une couche à grand indice de réfraction, ou la structure gaufrée est pourvue d'un élément en couche mince présentant un effet goniochromatique,
- la deuxième caractéristique de sécurité est un élément optique formant un faisceau en transmission, la deuxième caractéristique de sécurité étant un élément optique diffractif, qui, à partir d'un faisceau de lumière pour l'essentiel parallèle qui le traverse, produit en transmission une image pour projection, pouvant être reçue sur un écran, et que
- la structure gaufrée et l'enduction sont nivelées par une couche de vernis protecteur translucide, l'indice de réfraction de la couche de vernis protecteur correspondant à l'indice de réfraction de la couche de vernis dans laquelle la structure gaufrée est introduite.

2. Elément de sécurité transparent selon la revendication 1, **caractérisé en ce que** la première caractéristique de sécurité représente une structure diffractive de diffraction, en particulier un hologramme, un motif holographique à réseau diffractant, une structure de diffraction blazée, un hologramme produit par ordinateur (CGH) ou une autre structure de diffraction analogue à un hologramme.

3. Elément de sécurité transparent selon la revendication 1, **caractérisé en ce que** la première caractéristique de sécurité représente une structure mate.

4. Elément de sécurité transparent selon au moins l'une des revendications 1 à 3, **caractérisé en ce que** le modèle de réseau de la première caractéristique de sécurité est constitué d'un grand nombre de traits de réseau, ayant un profil de préférence sinusoïdal, l'écartement et l'orientation des traits du réseau variant sur la surface de la caractéristique de sécurité, pour produire un effet optique souhaité.

5. Elément de sécurité transparent selon au moins l'une des revendications 1 à 4, **caractérisé en ce que** la structure gaufrée est revêtue d'une couche métallique semi-transparente, sous forme d'une couche mince d'aluminium, de chrome, d'argent ou de cuivre, ou d'une couche à grand indice de réfraction, sous forme d'une couche mince de ZnS.

6. Elément de sécurité transparent pour papiers de sécurité, documents de valeur et analogues, qui comprend au moins une première et une deuxième caractéristiques de sécurité, qui sont disposées sur des côtés opposés de l'élément de sécurité, **caractérisé en ce que**
- la première caractéristique de sécurité est un élément optique semi-transparent formant un faisceau en réflexion, la première caractéristique de sécurité étant un élément optique diffractif, qui, à partir d'un faisceau de lumière pour l'essentiel parallèle qui le traverse, produit en réflexion une image pour projection pouvant être reçue sur un écran, et que
- la deuxième caractéristique de sécurité est un élément optique formant un faisceau en transmission, la deuxième caractéristique de sécurité étant un élément optique diffractif, qui, à partir d'un faisceau d'une lumière pour l'essentiel parallèle qui le traverse, produit en transmission une image pour projection pouvant être reçue sur un écran.

7. Elément de sécurité transparent selon la revendication 6, **caractérisé en ce que** la première caractéristique de sécurité contient une couche métallique semi-transparente, de préférence une couche mince d'aluminium, de chrome, d'argent ou de cuivre.

8. Elément de sécurité transparent selon au moins l'une des revendications 1 à 7, **caractérisé en ce que** l'élément de sécurité contient en outre, dans au moins un domaine partiel, un polariseur de type réseau, qui comprend un substrat ayant une première surface, dans laquelle une structure en relief est introduite,
- la structure en relief comportant un arrangement de traits de réseau parallèles, conducteurs de l'électricité, ayant une constante de réseau et une orientation du réseau prédéterminées, qui sont séparés les uns des autres par des espaces intercalaires pour l'essentiel non conducteurs, et
- la constante de réseau des traits du réseau est choisie de façon que le polariseur de type réseau modifie la polarisation de la lumière tombant sur les traits du réseau, de façon que la lumière réfléchie et/ou la lumière transmise subissent une polarisation linéaire dans un plan prédéfini.

9. Procédé de fabrication d'un élément de sécurité transparent pour papiers de sécurité, documents de valeur et analogues, dans lequel une feuille support transparente est, sur ses faces opposées, pourvue d'une première et d'une deuxième caractéristiques de sécurité, dans lequel
- en tant que première caractéristique de sécurité, on produit une caractéristique de sécurité, reconnaissable en réflexion, comportant un modèle de réseau influençant le rayonnement électromagnétique, et constitué d'un grand nombre de traits de réseau, et dans lequel on produit la première caractéristique de sécurité comportant une structure gaufrée, réalisée dans un vernis thermoplastique ou durcissant sous l'effet d'un rayonnement, la structure gaufrée étant revêtue d'une couche métallique semi-transparente ou d'une couche à grand indice de réfraction, ou la structure gaufrée étant pourvue d'un élément en couche mince présentant un effet goniochromatique,
- en tant que deuxième caractéristique de sécurité, on produit un élément optique formant un faisceau en transmission, la deuxième caractéristique de sécurité étant un élément optique diffractif, qui, à partir d'un faisceau de lumière pour l'essentiel parallèle qui le traverse, produit en transmission une image pour projection, pouvant être reçue sur un écran, et
- la structure gaufrée et l'enduction étant nivelées par une couche de vernis protecteur translucide, l'indice de réfraction de la couche de vernis protecteur correspondant à l'indice de réfraction de la couche de vernis dans laquelle la structure gaufrée est introduite.

10. Procédé de fabrication d'un élément de sécurité transparent pour papiers de sécurité, documents de valeur et analogues, dans lequel une feuille support transparente est, sur ses faces opposées, pourvue d'une première et d'une deuxième caractéristiques de sécurité, dans lequel
- en tant que première caractéristique de sécurité, on produit un élément optique semi-transparent, formant un faisceau en réflexion, la première caractéristique de sécurité étant un élément optique diffractif, qui, à partir d'un faisceau de lumière pour l'essentiel parallèle qui le traverse, produit en réflexion une image pour projection pouvant être reçue sur un écran, et
- en tant que deuxième caractéristique de sécurité, on produit un élément optique formant un faisceau en transmission, la deuxième caractéristique de sécurité étant un élément optique diffractif, qui, à partir d'un faisceau d'une lumière pour l'essentiel parallèle qui le traverse, produit en transmission une image pour projection pouvant être reçue sur un écran.

11. Papier de sécurité comportant un élément de sécurité transparent selon l'une des revendications 1 à 8, **caractérisé en ce que** l'élément de sécurité transparent est disposé dans ou sur une fenêtre ou une ouverture d'un seul tenant du papier de sécurité.

12. Document de valeur comportant un élément de sécurité transparent selon l'une des revendications 1 à 8 ou un papier de sécurité selon la revendication 11, **caractérisé en ce que** l'élément de sécurité transparent est disposé dans ou sur une fenêtre ou une ouverture d'un seul tenant du document de valeur.
